# EUROPEAN PATENT APPLICATION

(11) **EP 1 201 398 A1**
(43) Date of publication of application: **02.05.2002**
(21) Application number: 00890310.6
(22) Date of filing: 12.10.2000
(51) Int. Cl.: B29C 47/90, B29C 47/00, B29C 65/00

(54) **Method and apparatus for producing plastic profiles**

(71) Applicant: Technoplast Kunststofftechnik Gesellschaft m.b.H., 4563 Micheldorf (AT)
(72) Inventor: Dorninger, Frank, Ing., 4563 Micheldorf (AT); Gugenberger, Walter, 4623 Gunskirchen (AT); Walden, Anthony Patrick, Retford, Notts DN22 8RX (GB); Foster, Ian Neil, Doncaster, South Yorkshire DN3 1HD (GB)
(74) Representative: Babeluk, Michael, Dipl.-Ing. Mag.

(57) **Abstract**

The invention relates to a method for producing plastic profiles consisting of outer webs (1a, 1b) defining the contour of the profile and inner webs (2a, 2b, 2c) arranged between different chambers of the profile wherein the profile is extruded in an extruder (10) comprising an extruder die (11) and then passes through extrusion tools (12a, 12b, 12c; 13, 13a, 13b) to be calibrated and cooled down. The extrusion speed can be increased considerably in such a way that a first part (6) of the profile consisting of at least one outer web (1a) and at least one inner web (2a, 2b, 2c) and a second part (7) of the profile consisting at least of one outer web (1b) are extruded simultaneously, are then calibrated and cooled down in extrusion tools (12a, 12b, 12c; 13, 13a, 13b) separately, are then reheated partially and then fused together to form the required profile.

## Description

The invention relates to a method for producing plastic profiles according to the preamble of claim 1. Such hollow profiles are used for the production of windows. To improve the thermal insulationand the mechanical strength of the profiles they usually comprise different chambers separated by inner webs.

The most common production method of such profiles is to use an extruder with an extrusion die to form the entire profile and then to calibrate and cool down the profile in extrusion tools. The extrusion tools usually comprise dry calibrators and spray baths or water baths as disclosed in WO 88/03863. A caterpillar haul-off is used to pull the profile through the extrusion line.

To increase productivity of the production process it is desirable to increase extrusion speed. However, the limitation placed on the extrusion speed is the proper cooling of the profile. Though the outer webs of the profile can be cooled down rather quickly, the inner webs need more time for the cooling process. The reason is that the heat of the inner webs has to be transported by thermal conduction to the outside of the profile, which is a slow process due to the low thermal conductivity of the plastic material. It has been noticed that a more efficient cooling of the inner webs would offer the possibility of increasing the extrusion speed. Different solutions to that problem have been proposed. Thus, DE 24 55 779 A, FR 2 512 391 A or AT 348.743 A teach the introduction of a cooling medium into the chambers of a profile. However, this makes it necessary to have a conduit of the cooling medium in the center of the extrusion die which is likely to influence the extrusion process adversely. Generally, there is not enough space for sufficient thermal insulation so that parts of the extrusion die are coooled to a temperature too low for the production of a profile of high quality.

Furthermore, a method for the production of profiles is known from EP 0 953 711 A in which inner webs are introduced into a profile for enhancing the thermal insulation of the profile. The webs are produced in advance and introduced through the extrusion die. The extrusion die is provided with a complex arrangement to perform the extrusion since considerable space is necessary for feeding the webs through it. Furthermore, the quality of the profile is low since the material of the profile has to flow around the prefabricated webs. In addition, the extrusion process is difficult to handle since a sufficent supply of the inner webs has to be guaranteed to prevent an interruption in the. extrusion process.

It is the object of the invention to overcome these problems and to make it possible to increase the extrusion speed by efficient cooling of the inner parts of the profile.

According to the present invention a first part of the profile consisting of at least one outer web and at least one inner web and a second part of the profile consisting at least of one outer web are extruded simultaneously, are then calibrated and cooled down in extrusion tools separately, are then reheated partially and then fused together to form the required profile. It is essential for the invention that the profile is at first produced in at least two parts both of which form a part of the outer contour of the profile. Of course it is possible that three or more parts of the profile are produced at the same time. The inner webs of the profile may be part of only the first part of the profile or of all parts of it. Therefore, inner webs of the profile are part of the contour of the parts which are extruded and calibrated apart from one another. After cooling down, the parts of the profile are fused together to produce the required profile. In view of productivity it is necessary that these steps are conducted in line, that is in one process between extruder and caterpillar haul-off.

In a preferred embodiment of the invention the first part of the profile and the second part of the profile are produced in the same extrusion die. In that case the extrusion die has two different extrusion channels. Such an extrusion die is similar to the ones used in the double extrusion technique in which two similar profiles are produced in one extrusion line. After the extrusion die it is possible to introduce each part of the profile in a separate extrusion tool for calibration and cooling down. It is preferred, however, to provide a single extrusion tool in which two or more calibration channels are provided parallel one to the other. This allows a reduction of costs for the tools.

When an extruder with integrated coextruder is used, it is possible that the first part of the profile and the second part of the profile are produced of different types of plastic. The first part of the profile can thus be produced of new raw material for example whereas the second part may be produced of recycled material.

The invention further relates to an apparatus for producing plastic profiles according claim 5. Such an apparatus allows increasing the extrusion speed considerably since it is possible to cool down the inner webs of the profile in an efficient way. Moreover, the length of the extrusion line can be reduced since shorter extrusion tools are sufficient due to the better heat transfer.

As indicated above it is preferred when the extruder comprises at least two independent extrusion channels for the extrusion of two different plastic materials.

Another embodiment of the invention is defined in claim 7. In this embodiment the two parts of the profile are not produced from the beginning parallel to one another. The extrusion line in such a case is similar to a conventional coextrusion process in which a seal is extruded for example and introduced into a groove of the profile. However, the difference to the known process is that a part of the profile itself is produced by coextrusion in order to close an opening to an inner chamber left open in the main extrusion process. This type of apparatus is especially useful in cases where the first part of the profile represents the main part and the second part is only a small part of the profile.

Though the reheating for fusing together the parts of the profile is only conducted locally it is preferred to provide downstream of the heating device an additional calibrating tool to calibrate the entire profile. It is preferred that the heating device comprises nozzles for blowing hot air against the edges of the parts where they are fused together. The local heating can thus be controlled easily.

The present invention relates also to a plastic profile according to claim 10. Such a profile has a high quality in spite of the fact that high extrusion speeds are used for production of the profile. It is preferred that the second part consists only of a part of the outer contour of the profile. The first part therefore represents the main part of the profile with an opening for cooling the inner webs around a chamber of the profile.

The invention will now be explained in more detail in the following description of the preferred embodiments illustrated in the drawings.
- Fig. 1: shows a sectional view of a profile according to the invention;
- Fig. 2: shows schematically another embodiment of such a profile;
- Fig. 3 to 5: are schematic representations of extrusion lines of different embodiments of the invention;
- Fig. 6 and 7: show the apparatus for fusing the parts of the profile together in detail, wherein Fig. 6 is a sectional view according to line VI - VI in Fig. 7 and Fig. 7 is a sections view according to line VII - VII in Fig. 6.

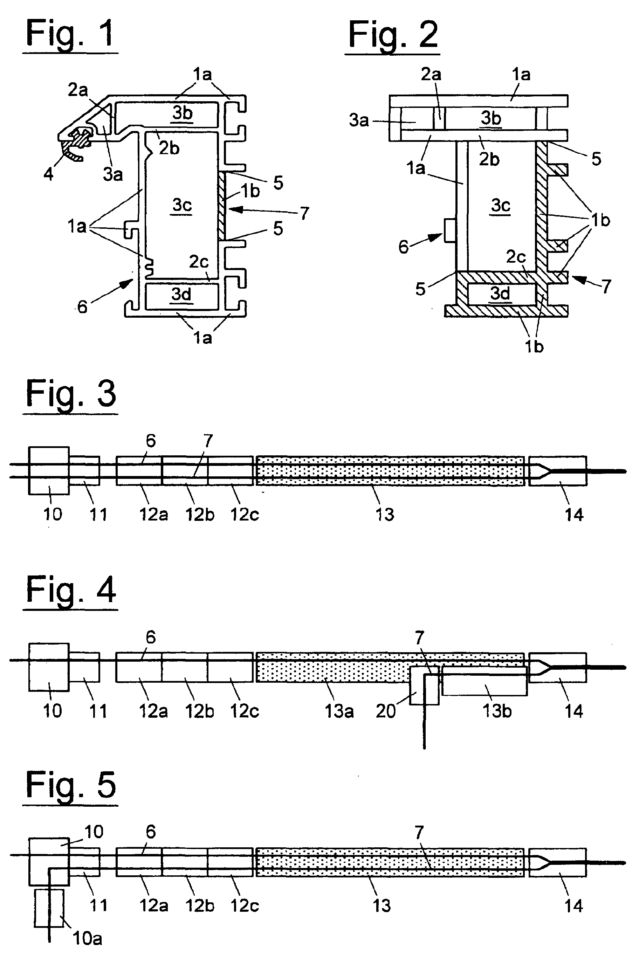

The profile of Fig. 1 consists of outer webs 1a, 1b and inner webs 2. The inner webs 2a, 2b, 2c separate different chambers 3a, 3b, 3c, 3d of the profile, and all chambers 3a, 3b, 3c, 3d are enclosed by outer webs 1a, 1b. A gasket 4 is arranged in a groove defined by outer webs 1a.

The profile of Fig. 1 is produced by extruding a first part 6 of the profile consisting of first outer web 1a and all inner webs 2a, 2b, 2c and a second part 7 consisting of a single outer web 1b. After cooling down and calibrating the first part 6 and the second part 7 they are fused together in their contact points 5 so that the entire profile is formed. The location of the second outer web 1b is choosen so that fusing points 5 are not visible in a window produced from this profile. Therefore there is no finishing step necessary to remove burrs or the like.

When the first part 6 of the profile is produced the inner webs 2b, 2c of the complete profile are accessible through the opening which is closed later by the second outer web 1b. Therefore it is possible to cool and calibrate chamber 3c in the same way as the outer contour of the profile. Therefore inner webs 2b, 2c can be cooled and calibrated in the same way as outer webs 1a, 1b.

Fig. 2 shows an alternative embodiment of a profile similar to the one of Fig. 1. The difference in respect of the embodiment of Fig. 1 is that the profile is composed of a first part 6 and a second part 7 which are virtually equal halves of the profile. The first part 6 of the profile consists of the first outer web 1a and of first inner webs 2a, 2b. The second part 7 of the profile consists of second outer web 1b and second inner web 2c. Therefore inner webs 2b, 2c can be calibrated and cooled in the same way as outer webs 1a, 1b.

It can be seen from Fig. 1 and Fig. 2 that inner web 2a is not accessible for cooling or calibration. In view of the relative small width of web 2a this is hardly a disadvantage. However, if it is necessary to cool and calibrate also inner web 2a directly, the profile could be composed of three parts which are fused together.

Figs. 3 to 5 show different embodiments for producing the profiles of Fig. 1 or Fig. 2. In the embodiment of Fig. 1 an extruder 10 with an extruder die 11 produces the first part and the second part of the profile simultaneously. First part 6 of the profile and the second part 7 of the profile are than cooled and calibrated in three dry extrusion tools 12a, 12b, 12c and a water bath 13. In 14 the first part 6 and the second part 7 of the profile are fused together. Fusing is conducted by blowing a stream of hot air exactly against the edges of first part 6 and second part 7 where they are in contact with each other. Since the rest of the profile remains cool the structure and the dimensions of the profile remain unchanged.

The embodiment of Fig. 4 differs from that of Fig. 3 in that only first part 6 of the profile is produced by extruder 10 with extruder die 11. Also in the dry extrusion unit 12a, 12b, 12c only the first part 6 of the profile is cooled and calibrated. In a first water bath 13a first part 6 of the profile is further cooled down. Parallel to this process a coextruder 20 is arranged to produce the second part 7 of the profile. This second part 7 is cooled down in a second water bath 13b and first part 6 and second part 7 of the profile are fused together in 14. Such a method is particularly suitable for a profile as shown in Fig. 1 in which the second part 1b is very small and simple.

The embodiment of Fig. 5 is very similar to that of Fig. 3 with the difference that extruder 10 comprises a main extruder 10a and a coextruder 10b. In the extrusion die 11 both parts 6, 7 of the profile are extruded simultaneously. In this embodiment it is possible to produce the first part 6 and the second part 7 from different materials so that it is possible to use new raw material for the first part which contains all visible parts of the profile whereas for second part 7 of the profile a recirculated material of less quality can be used. Further it is possible to produce profiles in which the outside of the finished window has another colour than the inside of the window. Cooling and calibration of the embodiment of Fig. 5 is similar to that of Fig. 3.

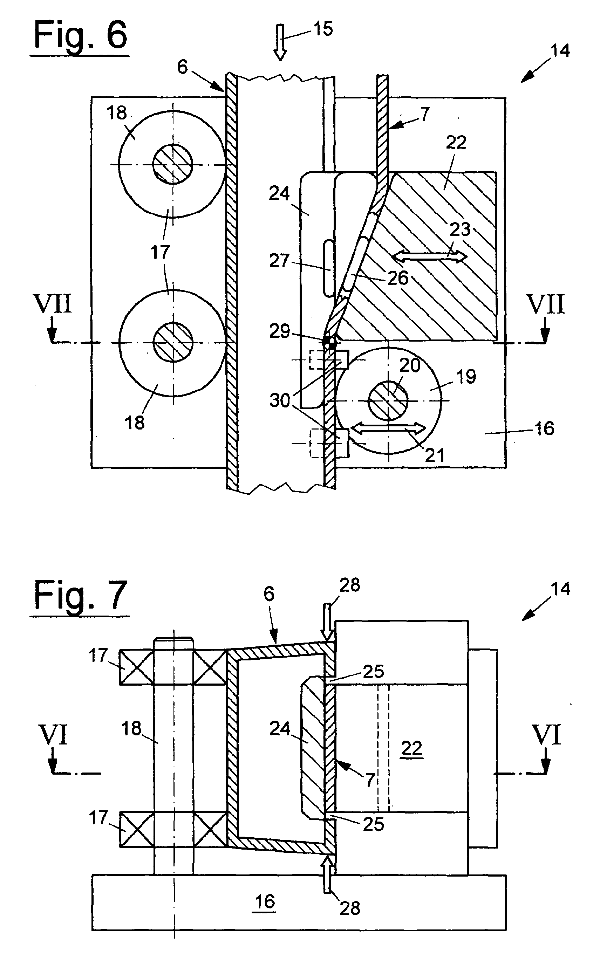

Fig. 6 and 7 show the device 14 for welding together the parts 6, 7 of the profile. The arrow 15 shows the feeding direction of the profile. On the base plate 16 rollers 17 mounted on axis 18 are mounted for guiding the profile. A further roller 19 attached to an axis 20 is adjustable in the direction of arrow 21 to make a proper calibration possible.

A guiding element 22 guides the second part 7 of the profile to the opening in the first part 6 of the profile so that they can be fused together. The guiding element 22 can be adjusted according to arrow 23 to give an optimal match between parts 6 and 7. At the inside of the first part 6 of the profile a tongue 24 is placed which is connected to the guiding element 22. Therefore, an exact alignment of part 6 and 7 can be accomplished. Tongue 24 is held by protrusions 25 of guiding element 22 which serve as distance element between parts 6 and 7 of the profile. From Fig. 7 it can be seen, that the first part 6 of the profile is elastically deformed by protrusions 25 to make it possible to introduce the second part 7. Openings 26, 27 in guiding element 22 and tongue 24 are provided to guide streams of hot air to the fusing points of the profile. In 29 part 6 and 7 are fused together by applying force according to arrows 28 by rollers 30.

The present invention makes it possible to considerably increase extrusion speed since it is possible to cool down also the inner webs of the profile in a way similar to the outer webs.

## Claims

1. A method for producing plastic profiles consisting of outer webs (1a, 1b) defining the contour of the profile and inner webs (2a, 2b, 2c) arranged between different chambers of the profile wherein the profile is extruded in an extruder (10) comprising an extruder die (11) and then passes through extrusion tools (12a, 12b, 12c; 13, 13a, 13b) to be calibrated and cooled down, **characterised in that** a first part (6) of the profile consisting of at least one outer web (1a) and at least one inner web (2a, 2b, 2c) and a second part (7) of the profile consisting at least of one outer web (1b) are extruded simultaneously, are then calibrated and cooled down in extrusion tools (12a, 12b, 12c; 13, 13a, 13b) separately, are then reheated partially and then fused together to form the required profile.

2. A method of claim 1, **characterised in that** the first part (6) of the profile and the second part (7) of the profile are produced in the same extrusion die (11).

3. A method of claim 1 or 2, **characterised in that** the first part (6) of the profile and the second part (7) of the profile are produced in the same extrusion tool (12a, 12b, 12c; 13, 13a, 13b).

4. A method of one of the claims 1 to 3, **characterised in that** the first part (6) of the profile and the second part (7) of the profile are produced of different types of plastic.

5. An apparatus for producing plastic profiles with outer webs (1a, 1b) defining the contour of the profile and inner webs (2a, 2b, 2c) arranged between different chambers (3a, 3b, 3c, 3d) of the profile, with said apparatus comprising an extruder (10) with an extrusion die (11) for producing a first part (6) of the profile consisting of at least one outer web (1a, 1b) and at least one inner web (2a, 2b, 2c) and a second part (7) of the profile consisting at least of one outer web (1a, 1b), a common extrusion tool (12a, 12b, 12c; 13, 13a, 13b) for cooling and calibrating the first part (6) and the second part (7) of the profile separately and a heating device for reheating at least one part (6) of the profile for fusing together with the other part (7).

6. An apparatus of claim 5, **characterised in that** the extruder (10) comprises at least two independent extrusion channels for the extrusion of two different plastic materials.

7. An apparatus for producing plastic profiles with outer webs (1a, 1b) defining the contour of the profile and inner webs (2a, 2b, 2c) arranged between different chambers (3a, 3b, 3c, 3d) of the profile, with said apparatus comprising a first extruder (10) with an extrusion die (11) for producing a first part (6) of the profile consisting of at least one outer web (1a, 1b) and at least one inner web (2a, 2b, 2c) and a second extruder (10a, 20) for producing a second part (7) of the profile consisting at least of one outer web (1a, 1b), calibration tools (12a, 12b, 12c) for cooling and calibrating the first part (6) and the second part (7) of the profile separately and a heating device for reheating at least one part of the profile (6) for fusing together with the other part (7).

8. An apparatus of one of the claims 5 to 7, **characterised in that** downstream of the heating device (14) an additional calibrating tool is provided to calibrate the entire profile.

9. An apparatus of one of claims 5 to 8, **characterised in that** the heating device (14) comprises nozzles for blowing hot air against the edges of the parts where they are fused together.

10. A plastic profile consisting of outer webs (1a, 1b) defining the contour of the profile and inner webs (2a, 2b, 2c) arranged between different chambers (3a, 3b, 3c, 3d) of the profile, **characterised in that** a first part (6) of the profile consisting of at least one outer web (1a, 1b) and at least one inner web (2a, 2b, 2c) and a second part (7) of the profile consisting at least of one outer web (1a, 1b) are fused together to form the required profile.

11. A profile of claim 10, **characterised in that** the first part (6) and the second part (7) are made of different plastic materials.

12. A profile of one of claims 10 or 11, **characterised in that** the second part (7) consists only of an outer web (1b) of the outer contour of the profile.
